# EUROPEAN PATENT APPLICATION

(11) **EP 4 472 314 A1**
(43) Date of publication of application: **04.12.2024**
(21) Application number: 22923898.5
(22) Date of filing: 28.01.2022
(51) Int. Cl.: H04W 72/04

(54) **TERMINAL AND COMMUNICATION METHOD**

(71) Applicant: NTT DOCOMO, INC., Tokyo 100-6150 (JP)
(72) Inventor: HARADA, Hiroki, Tokyo 100-6150 (JP); OKANO, Mayuko, Tokyo 100-6150 (JP); OKAMURA, Masaya, Tokyo 100-6150 (JP)
(74) Representative: Hoffmann Eitle
(86) International application number: PCT/JP2022/003459
(87) International publication number: WO 2023/145034

(57) **Abstract**

A terminal includes: a reception unit configured to receive, from a base station, information indicating whether a field included in control information for performing multi-carrier scheduling is configured for each of carriers to be scheduled or is configured in common for the carriers to be scheduled; and a control unit configured to interpret the control information based on the information. The reception unit receives the control information from the base station, the control unit determines whether the field included in the control information is configured for each of the carriers to be scheduled or is configured in common for the carriers to be scheduled, and the reception unit receives each of the carriers scheduled by the control information based on the determination.

## Description

### FIELD OF THE INVENTION

The present invention relates to a terminal and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In addition, discussions on 6G as the next generation wireless communication method to 5G have been started, and the radio quality exceeding 5G is expected to be achieved. For example, in 6G, discussions are being held aiming at, for example, further increase in capacity, use of a new frequency band, further reduction in latency, further increase in reliability, further reduction in power consumption, coverage enhancement in the new domains (high altitude, the ocean, and the space) according to the non-terrestrial network, or the like (for example, non-patent document 2).

### Citation List

### Non-Patent Document

Non-Patent Document 1: 3GPP TS 38.300 V16.8.0 (2021-12)
Non-Patent Document 2: 3GPP TR 38.821 V16.1.0 (2021-05)
Non-Patent Document 3: 3GPP TS 38.212 V16.8.0 (2021-12)

### SUMMARY OF THE INVENTION

### TECHNICAL PROBLEM

Enhancement of a multi-carrier operation is being discussed. In this discussion, a method of multi-cell PDSCH or PUSCH scheduling by a single DCI (Downlink Control Information) is being discussed. However, with respect to the DCI, which field is to be configured in common for carriers has been unclear and which field is to be configured for each of the carriers has been unclear.

The present invention has been made in view of the foregoing points and enables performing of multi-carrier scheduling by using single control information in a wireless communication system.

### SOLUTION TO PROBLEM

According to the disclosed technique, a terminal is provided. The terminal includes: a reception unit configured to receive, from a base station, information indicating whether a field included in control information for performing multi-carrier scheduling is configured for each of carriers to be scheduled or is configured in common for the carriers to be scheduled; and a control unit configured to interpret the control information based on the information. The reception unit receives the control information from the base station, the control unit determines whether the field included in the control information is configured for each of the carriers to be scheduled or is configured in common for the carriers to be scheduled, and the reception unit receives each of the carriers scheduled by the control information based on the determination.

### ADVANTAGEOUS EFFECTS OF INVENTION

According to the disclosed technique, the multi-carrier scheduling can be performed by single control information in the wireless communication system.

### BRIEF DESCRIPTION OF THE DRAWINGS

[Fig. 1] is a drawing illustrating a configuration example (1) of a wireless communication system in an embodiment of the present invention.
[Fig. 2] is a drawing illustrating a configuration example (2) of a wireless communication system in an embodiment of the present invention.
[Fig. 3] is a drawing illustrating an example (1) of a scheduling operation.
[Fig. 4] is a drawing illustrating an example (2) of a scheduling operation.
[Fig. 5] is a drawing illustrating an example (3) of a scheduling operation.
[Fig. 6] is a sequence diagram illustrating an example (1) of a scheduling operation in an embodiment of the present invention.
[Fig. 7] is a flowchart illustrating an example (2) of a scheduling operation in an embodiment of the present invention.
[Fig. 8] is a flowchart illustrating an example (3) of a scheduling operation in an embodiment of the present invention.
[Fig. 9] is a drawing illustrating an example of a functional structure of a base station 10 related to an embodiment of the present invention.
[Fig. 10] is a drawing illustrating an example of a functional structure of a terminal 20 related to an embodiment of the present invention.
[Fig. 11] is a drawing illustrating an example of a hardware structure of the base station 10 or the terminal 20 related to an embodiment of the present invention.
[Fig. 12] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

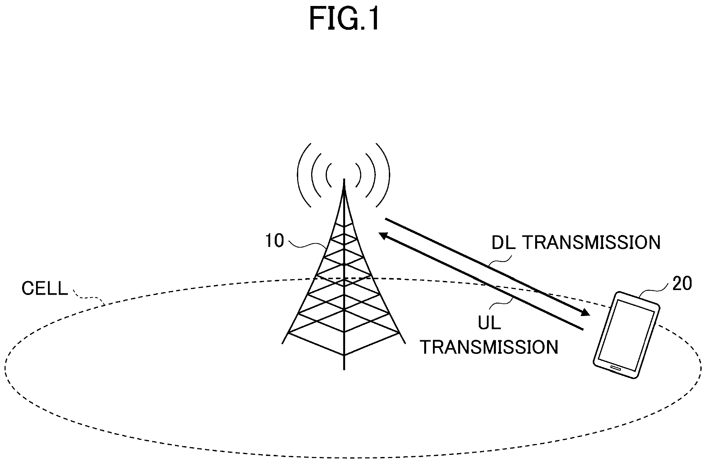

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

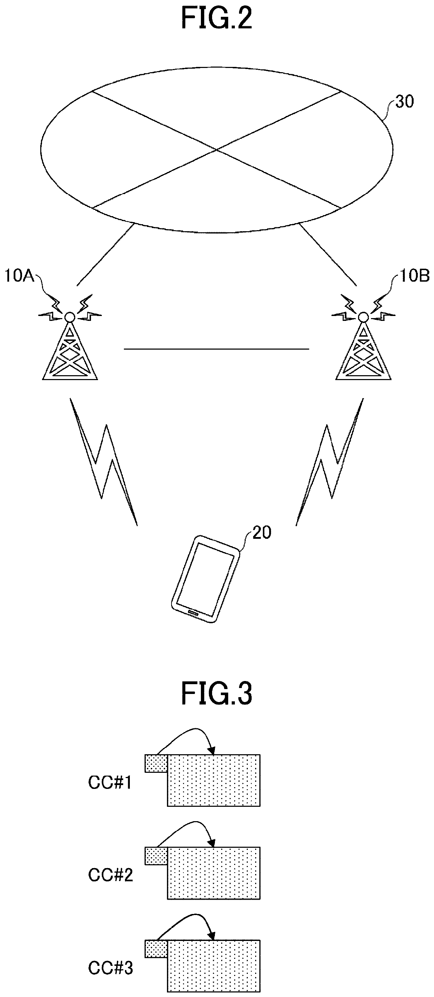

Fig. 2 is a drawing illustrating an example (2) of a wireless communication system according to an embodiment of the present invention. Fig. 2 shows an example of a configuration of a wireless communication system in a case where DC (Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCG Cell) and one or more SCells.

Processing operations in an embodiment of the present invention may be performed in a system configuration shown in Fig. 1, in a system configuration shown in Fig. 2, or in other system configurations.

Enhancement of a multi-carrier operation is being discussed. In this discussion, a method of multi-cell PDSCH or PUSCH scheduling by a single DCI (Downlink Control Information) is being discussed. Hereinafter, "PDSCH or PUSCH" will be also described as "PDSCH/PUSCH".

In a case of scheduling PDSCH/PUSCH of a plurality of CCs by a single DCI, there is an advantageous point that the load of DCI (PDCCH) monitoring (for example, the number of blind decoding times) can be reduced as compared with a method of scheduling CCs one by one by preparing a DCI for each of the CCs. In addition, the more the size of the single DCI becomes smaller compared with the size of the conventional DCI multiplied by the number of CCs, the more the total PDCCH overhead becomes smaller. On the other hand, there is a disadvantageous point that indication contents cannot be flexibly changed for each of the CCs. In a case where flexible changing of indication contents is enabled, the size of the single DCI becomes large, and thus, the PDCCH error rate will be worsened and the overhead will be increased. In addition, in a case where there is an error of PDCCH decoding, data reception of all of a plurality of CCs will fail.

Fig. 3 is a drawing illustrating an example (1) of a scheduling operation. As illustrated in Fig. 3, in the conventional self-carrier scheduling, PDCCH and DCI are transmitted for each of the CCs and PDSCH/PUSCH is scheduled for the CC.

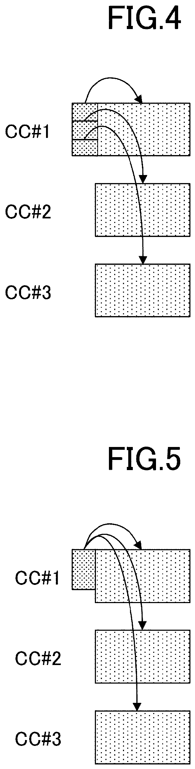

Fig. 4 is a drawing illustrating an example (2) of a scheduling operation. As illustrated in Fig. 4, in the conventional cross-carrier scheduling, PDSCH/PUSCH is scheduled for each CC by PDCCH and DCI in another CC.

Fig. 5 is a drawing illustrating an example (3) of a scheduling operation. As illustrated in Fig. 5, in the multi-carrier scheduling, a single DCI schedules PDSCH/PUSCH for each CC.

Here, with respect to the single DCI that performs multi-carrier scheduling, which field is to be configured in common for CCs has been unclear and which field is to be configured for each of the CCs has been unclear.

Accordingly, in order to take advantage of the single DCI multi-carrier scheduling, a DCI design that is adapted to more applications or environments may be developed. For example, the options 1) to 3) described below may be applied.

Option 1) In the DCI used for multi-carrier scheduling, with respect to at least one field, the base station 10 may be capable of configuring whether to indicate a value for each of the CCs to be scheduled or to indicate a value common among the CCs to be scheduled.

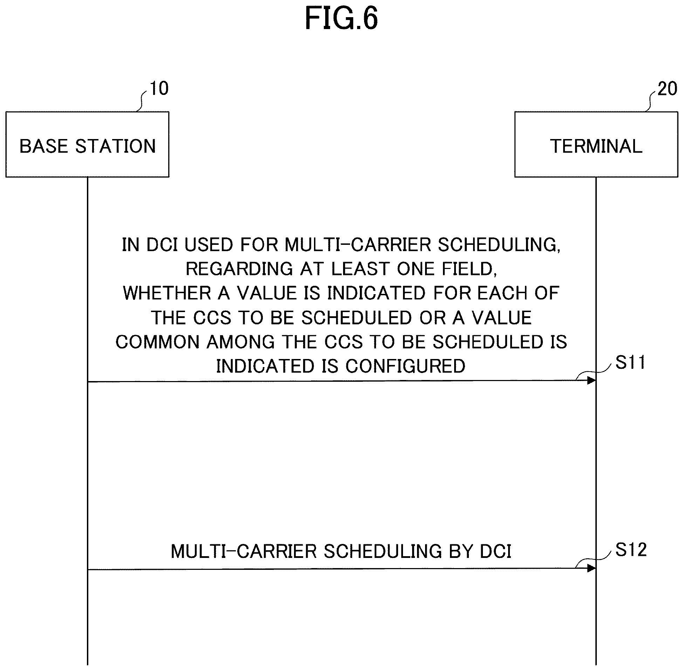

Fig. 6 is a sequence diagram illustrating an example (1) of a scheduling operation in an embodiment of the present invention. In step S11, in the DCI used for the multi-carrier scheduling, with respect to at least one field, the base station 10 transmits, to the terminal 20, information for configuring whether to indicate a value for each of the CCs to be scheduled or to indicate a value common among the CCs to be scheduled. In subsequent step S12, the base station 10 performs multi-carrier scheduling for the terminal 20 by using a DCI to which the above-described configuration is applied.

For example, the above-described configuration transmitted from the base station 10 to the terminal 20 may be indicated by any one of RRC (Radio Resource Control) signaling, SIB (System Information Block), MAC-CE (Medium Access Control - Control Element) and DCI, or may be indicated by a combination of a plurality of signaling methods.

The above-described configuration transmitted from the base station 10 to the terminal 20 may be indicated for each field, or may be collectively indicated for a plurality of fields.

For example, the terminal 20 may expect a DCI size corresponding to the above-described configuration by the base station 10.

For example, the UE capability indicating whether or not the configuration by the base station 10 can be performed may be defined. The UE capability may be separately defined for each field or for each of a plurality of sets of fields. The UE capability may be separately defined for the intra-band and for the inter-band. The UE capability may be separately defined for each of the configurable maximum numbers of CCs. The UE capability may be defined for any one of each UE, each FR (Frequency Range), each band, each band combination, each feature set, or each of the feature set CCs.

For example, a field for which a value is always indicated for each CC and/or a field for which a value common among CCs is always indicated may be specified by the technical specification. For example, the field for which a value is always indicated may be an HPN (HARQ process number), an RV (Redundancy version), an NDI (New data indicator), or the like. For example, the field for which a value common among CCs is always indicated may be a CIF (Carrier indicator field), an PRI (PUCCH Resource Indicator), a PDSCH-to-HARQ feedback timing indicator, or the like (refer to non-patent document 3).

Option 2) In the DCI used for multi-carrier scheduling, with respect to at least one field, whether a value is indicated for each of the CCs to be scheduled or a value common among the CCs to be scheduled may be determined according to a specific condition. For example, the specific condition may be, for example, a condition related to the intra-band, inter-band, FR1, FR2, the number of CCs, SCS, or the like.

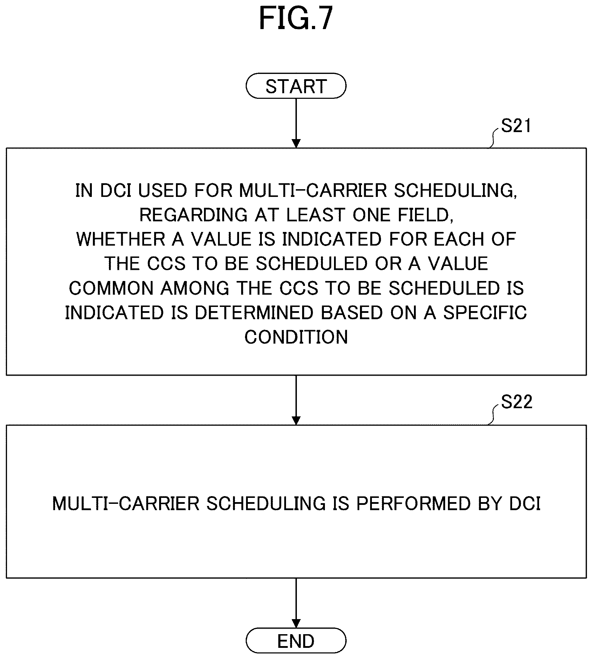

Fig. 7 is a flowchart illustrating an example (2) of a scheduling operation in an embodiment of the present invention. In step S21, in the DCI used for the multi-carrier scheduling, with respect to at least one field, the base station 10 and the terminal 20 determine whether to indicate a value for each of the CCs to be scheduled or to indicate a value common among the CCs to be scheduled, according to a specific condition. In subsequent step S22, the base station 10 performs multi-carrier scheduling for the terminal 20 by using the determined DCI.

For example, whether or not the at least one field is configured for the CCs in common or is configured for each of the CCs may be determined based on whether the CCs to be scheduled include the intra-band alone or include the inter-band. The number of fields common among the CCs may be increased and the DCI size may be decreased in a case of the intra-band alone when compared with a case of including the inter-band.

For example, whether or not the at least one field is configured for the CCs in common or is configured for each of the CCs may be determined based on whether the CCs to be scheduled include the intra-FR alone or include the inter-FR. The number of fields common among the CCs may be increased and the DCI size may be decreased in a case of the intra-FR alone when compared with a case of including the inter-FR.

For example, whether or not the at least one field is configured for the CCs in common or is configured for each of the CCs may be determined based on whether or not a predetermined FR is included in the CCs to be scheduled.

For example, whether or not the at least one field is configured for the CCs in common or is configured for each of the CCs may be determined based on whether the number of CCs to be scheduled (the number that is dynamically indicated, or the maximum number that is semi-statically configured) is greater or less than a predetermined value.

For example, whether or not the at least one field is configured for the CCs in common or is configured for each of the CCs may be determined based on whether the CCs to be scheduled include a single SCS alone or include a plurality of SCSs. The number of fields common among the CCs may be increased and the DCI size may be decreased in a case of the single SCS alone when compared with a case of including a plurality of SCSs.

For example, whether or not the at least one field is configured for the CCs in common or is configured for each of the CCs may be determined based on whether or not a specific combination of SCSs is included in the CCs to be scheduled.

For example, whether or not the at least one field is configured for the CCs in common or is configured for each of the CCs may be determined based on whether the CCs to be scheduled include a licensed CC alone or include an unlicensed CC.

It is to be noted that the above-described option 1) and the above-described option 2) may be combined. For example, with respect to a field, whether the base station 10 is capable of performing configuration common among the CCs or performing configuration for each of the CCs may be determined based on the relationship between the CCs to be scheduled.

Option 3) Whether or not the multi-carrier scheduling DCI can be applied may be specified according to at least one of the conditions described in 1) or 2) below.
1) The multi-carrier scheduling DCI may be capable of being applied to only some of the fallback DCI (0_0, 1_0), the non-fallback DCI (0_1, 1_1), and the compact DCI (0_2, 1_2).
   For example, the multi-carrier scheduling may be capable of being applied to the non-fallback DCI alone. For example, the multi-carrier scheduling may be capable of being applied to only the non-fallback DCI and the compact DCI.
2) The multi-carrier scheduling DCI may be capable of being applied to only a case in which the CCs to be scheduled include only a specific CC.

For example, the specific CC may be a CC that does not include a specific FR (for example, FR2-2). The specific CC may be a CC that does not include a combination of specific different FRs (for example, FR1 and FR2). The specific CC may be a CC that does not include an unlicensed frequency. The specific CC may be a CC that does not include both a licensed frequency and an unlicensed frequency. The specific CC may be a CC that does not include a specific SCS (for example, 480 kHz or 960 kHz). The specific CC may be a CC that does not include a combination of specific different SCSs (for example, 15 kHz and 30 kHz, 480 kHz and 960 kHz).

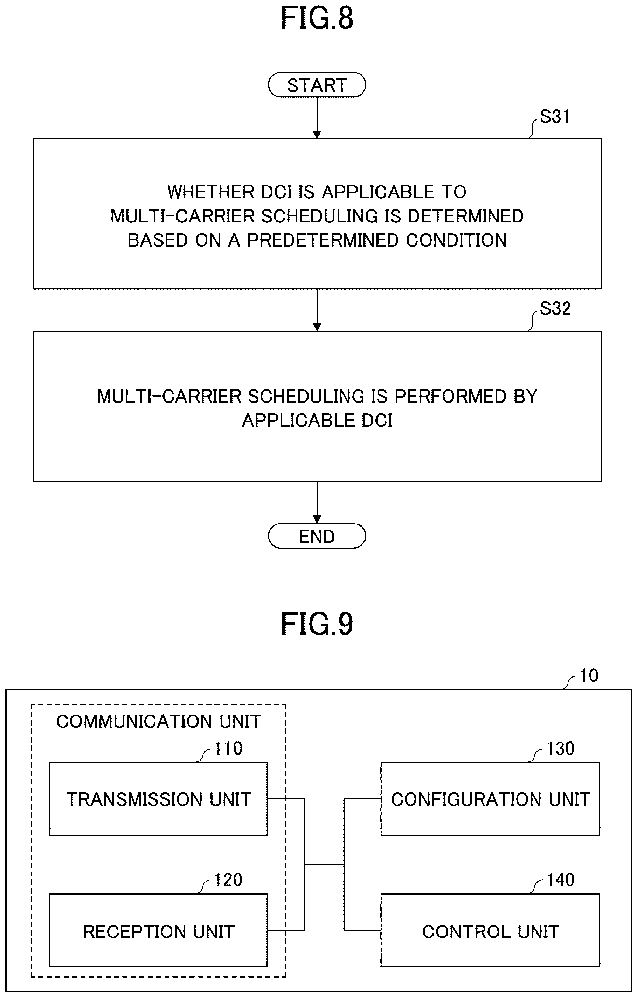

Fig. 8 is a flowchart illustrating an example (3) of a scheduling operation in an embodiment of the present invention. In step S31, the base station 10 and the terminal 20 determine whether or not the DCI is applicable to multi-carrier scheduling based on the predetermined condition. In subsequent step S32, the base station 10 performs multi-carrier scheduling for the terminal 20 by using the applicable DCI.

An embodiment with respect to each of the fields in the DL grant will be described below. It is to be noted that details of each field are referred to in non-patent document 3.

DCI format indicator (DCI format identifier): may be always assumed to be configured in common among CCs, that is, may be assumed to be a single field.

Carrier indicator: may be always assumed to be configured in common among CCs, that is, may be assumed to be a single field, or may be defined as a field for specifying a single cell or a plurality of cells to be scheduled. In addition, the field may be assumed to be configured for each CC, and, for example, each of the fields may be defined as specifying presence or absence of the corresponding cell of the plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, the size of the field (total) may be larger than the conventional field.

BWP indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the BWP of the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

TDRA (Time Domain Resource Allocation): may be always assumed to be configured in common among CCs, that is, may be assumed to be a single field, or may be defined as a field for specifying a TDRA of each of a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, whether or not the SCS is common among CCs to be scheduled. In addition, a combination of TDRA candidate values for each of the plurality of cells may be configured by RRC signaling. A restriction, for example, that the SCS is required to be common among all of the cells to be scheduled, may be specified.

FDRA (Frequency Domain Resource Allocation): may be always assumed to be configured in common among CCs, that is, may be assumed to be a single field, or may be defined as a field for specifying an FDRA of each of a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, whether or not a cell to be scheduled is an intra-band. In addition, a combination of FDRA candidate values for each of the plurality of cells may be configured by RRC signaling. The interpretation of the FDRA field that is common among CCs may be different from the conventional interpretation. For example, the field may be interpreted as an FDRA in the broadband including a plurality of intra-band CCs, or the interpretation may be changed for each of the cells to be scheduled.

Rate matching indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the rate matching of the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed. In addition, a combination of the rate matching patterns for each of the plurality of cells may be configured by RRC signaling.

ZP-CSI-RS trigger: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the ZP-CSI-RS trigger of the corresponding cell of a plurality of cells to be scheduled Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed. A combination of aperiodic ZP-CSI-RS resource sets for each of the plurality of cells may be configured by RRC signaling.

MCS (Modulation and Coding Scheme): may be always assumed to be configured in common among CCs, that is, may be assumed to be a single field, or may be defined as a field for specifying an MCS common among a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling.

NDI/RV (New data indicator/Redundancy version): may be always assumed to be configured for each of the CCs. The RV size may be smaller than the conventional size, and may be specified in one bit to be: 0 or 2; or 0 or 1, in the multi-carrier scheduling.

2nd TB: Presence or absence of the 2nd TB may be determined in common among the CCs, the field may be capable of being enabled or disabled for each of the CCs, or switching between the above-described cases may be performed according to a specific condition.

HPN (HARQ process number): may be always assumed to be configured for each of the CCs.

DAI (Downlink assignment index): may be always assumed to be configured in common among the CCs, or a single field and value may be assumed.

PRI: may be always assumed to be configured in common among the CCs, or a single field and value may be assumed.

PDSCH-to-HARQ feedback timing indicator: may be always assumed to be configured in common among the CCs, or a single field and value may be assumed. Which PDSCH is to be used as a reference for interpretation of the value of this field may be specified by the technical specification. For example, the PDSCH of a cell used for transmitting a PUCCH may be used as a reference, the PDSCH whose timing is the latest may be used as a reference, or the PDSCH to be used as a reference may be configured by the base station 10.

One-shot HARQ-ACK request: may be always assumed to be configured in common among the CCs, or a single field and value may be assumed. In a case of the multi-carrier scheduling DCI, this field is not required to be assumed.

Enhanced Type 2 codebook indicator: may be always assumed to be configured in common among the CCs, or a single field and value may be assumed. In a case of the multi-carrier scheduling DCI, this field is not required to be assumed.

PDSCH group index: may be always assumed to be configured in common among the CCs, or a single field and value may be assumed. In a case of the multi-carrier scheduling DCI, this field is not required to be assumed.

New feedback indicator: may be always assumed to be configured in common among the CCs, or a single field and value may be assumed. In a case of the multi-carrier scheduling DCI, this field is not required to be assumed.

Number of requested PDSCH groups: may be always assumed to be configured in common among the CCs, or a single field and value may be assumed. In a case of the multi-carrier scheduling DCI, this field is not required to be assumed.

HARQ-ACK retransmission indicator: may be always assumed to be configured in common among the CCs, or a single field and value may be assumed. In a case of the multi-carrier scheduling DCI, this field is not required to be assumed.

Antenna port(s): may be always assumed to be configured in common among CCs, that is, may be assumed to be a single field, or may be defined as a field for specifying an antenna port of the corresponding cell of a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, whether or not a cell to be scheduled is an intra-band.

Transmission configuration indication: may be always assumed to be configured in common among CCs, that is, may be assumed to be a single field, or may be defined as a field for specifying a TCI of the corresponding cell of a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, whether or not a cell to be scheduled is an intra-band.

SRS request: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying an SRS request of the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

SRS offset indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying an SRS offset of the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed. A combination of SRS offset candidate values for each of a plurality of cells may be configured by RRC signaling.

CBG transmission information (CBGTI): may be assumed to be configured for each CC, and, for example, each of the fields may be defined as specifying the corresponding cell of a plurality of cells to be scheduled. In a case of the multi-carrier scheduling DCI, this field is not required to be assumed.

CBG flushing out information (CBGFI): may be always assumed to be configured for each CC, and, for example, each of the fields may be defined as specifying the corresponding cell of a plurality of cells to be scheduled. In a case of the multi-carrier scheduling DCI, this field is not required to be assumed.

DMRS sequence initialization: may be always assumed to be configured in common among CCs, that is, may be assumed to be a single field, or may be defined as a field for specifying a configuration common among a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling.

Priority indicator: may be always assumed to be configured in common among CCs, that is, may be assumed to be a single field, or may be defined as a field for specifying a configuration common among a plurality of cells to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

ChannelAccess-CPext: may be always assumed to be configured in common among the CCs, that is, may be assumed to be a single field, or a single field and value may be assumed. In a case of the multi-carrier scheduling DCI, this field is not required to be assumed.

Minimum applicable scheduling offset indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

SCell dormancy indication: may be always assumed to be configured in common among the CCs, or a single field and value may be assumed. In a case of the multi-carrier scheduling DCI, this field is not required to be assumed.

PDCCH monitoring adaptation indication: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

PUCCH Cell indicator: may be always assumed to be configured in common among the CCs, or a single field and value may be assumed. In a case of the multi-carrier scheduling DCI, this field is not required to be assumed.

An embodiment with respect to each of the fields in the UL grant will be described below. It is to be noted that details of each field are referred to in non-patent document 3.

DFI flag: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

TPC command for scheduled PUSCH: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

UL/SUL indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

SRS resource set indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

SRS resource indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

PTRS-DMRS association: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

Beta_offset_indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

UL-SCH indicator: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, the maximum number of CCs to be scheduled, the maximum number being configured by RRC signaling. In a case of the multi-carrier scheduling DCI, this field is not required to be assumed.

ChannelAccess-CPext-CAPC: may be always assumed to be configured in common among CCs, that is, may be assumed to be a single field, may be assumed to be an indication for a specific cell, or may be assumed to be an indication for all of the CCs to be scheduled. In addition, the field may be assumed to be configured for each CC, and, for example, each of the fields may be defined as specifying the corresponding cell of a plurality of cells to be scheduled. Whether to be configured in common among CCs or to be configured for each CC may be switched according to a specific condition, for example, depending on the intra-band or the inter-band. In a case of the multi-carrier scheduling DCI, this field is not required to be assumed.

According to an embodiment of the present invention, with respect to each of the fields of DCI for performing the multi-carrier scheduling, the base station 10 and the terminal 20 can adjust the trade-off between flexibility and performance by determining whether to be configured in common among the CCs or to be configured for each of the CCs.

In other words, the multi-carrier scheduling can be performed by single control information in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

Fig. 9 is a drawing illustrating an example of a functional structure of a base station 10 according to an embodiment of the present invention. As shown in Fig. 9, the base station 10 includes a transmission unit 110, a reception unit 120, a configuration unit 130, and a control unit 140. The functional configuration illustrated in Fig. 9 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the multi-carrier scheduling, or the like.

The control unit 140 performs control related to the multi-carrier scheduling as described in an embodiment of the present invention. The functional units related to signal transmission in the control unit 140 may be included in the transmission unit 110, and the functional units related to signal reception in the control unit 140 may be included in the reception unit 120.

### <Terminal 20>

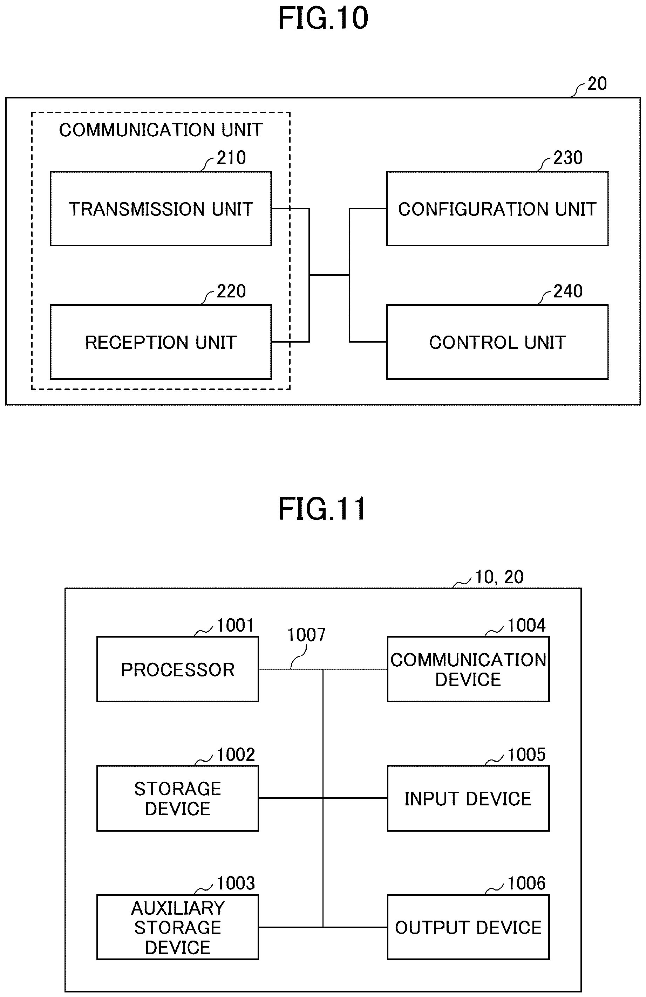

Fig. 10 is a drawing illustrating an example of a functional structure of a terminal 20 according to an embodiment of the present invention. As shown in Fig. 10, the terminal 20 includes a transmission unit 210, a reception unit 220, a configuration unit 230, and a control unit 240. The functional configuration illustrated in Fig. 10 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the multi-carrier scheduling, or the like.

The control unit 240 performs control related to the multi-carrier scheduling as described in an embodiment of the present invention. The functional units related to signal transmission in the control unit 240 may be included in the transmission unit 210, and the functional units related to signal reception in the control unit 240 may be included in the reception unit 220.

### (Hardware structure)

In the above block diagrams used for describing an embodiment of the present invention (Fig. 9 and Fig. 10), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

For example, the base station 10, the terminal 20, etc., according to an embodiment of the present disclosure may function as a computer for processing the radio communication method of the present disclosure. Fig. 11 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 9 may be realized by control programs that are stored in the storage device 1002 and are executed by the processor 1001. Further, for example, the control unit 240 of the terminal 20 illustrated in Fig. 10 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

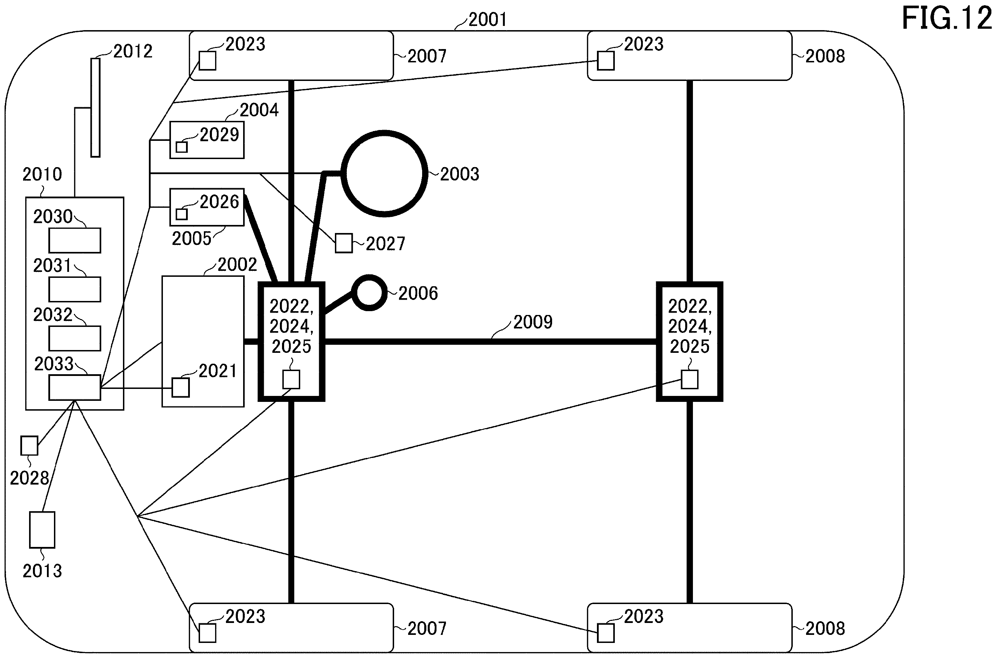

Fig. 12 shows an example of a configuration of a vehicle 2001. As shown in Fig. 12, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an Al processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive, from a base station, information indicating whether a field included in control information for performing multi-carrier scheduling is configured for each of carriers to be scheduled or is configured in common for the carriers to be scheduled; and a control unit configured to interpret the control information based on the information. The reception unit receives the control information from the base station, the control unit determines whether the field included in the control information is configured for each of the carriers to be scheduled or is configured in common for the carriers to be scheduled, and the reception unit receives each of the carriers scheduled by the control information based on the determination.

According to the above-described configuration, with respect to each of the fields of DCI for performing the multi-carrier scheduling, the base station 10 and the terminal 20 can adjust the trade-off between flexibility and performance by determining whether to be configured in common among the CCs or to be configured for each of the CCs. In other words, the multi-carrier scheduling can be performed by single control information in the wireless communication system.

The information may be indicated for each field of the control information or may be collectively indicated for a plurality of fields of the control information. According to the above-described configuration, with respect to each of the fields of DCI for performing the multi-carrier scheduling, the base station 10 and the terminal 20 can adjust the trade-off between flexibility and performance by determining whether to be configured in common among the CCs or to be configured for each of the CCs.

The control unit may perform a configuration according to the information for each field or for a plurality of fields. According to the above-described configuration, with respect to each of the fields of DCI for performing the multi-carrier scheduling, the base station 10 and the terminal 20 can adjust the trade-off between flexibility and performance by determining whether to be configured in common among the CCs or to be configured for each of the CCs.

The control unit may perform a configuration according to the information separately for an intra-band or an inter-band. According to the above-described configuration, with respect to each of the fields of DCI for performing the multi-carrier scheduling, the base station 10 and the terminal 20 can adjust the trade-off between flexibility and performance by determining whether to be configured in common among the CCs or to be configured for each of the CCs.

The control unit may perform a configuration according to the information for each of configurable maximum carrier numbers. According to the above-described configuration, with respect to each of the fields of DCI for performing the multi-carrier scheduling, the base station 10 and the terminal 20 can adjust the trade-off between flexibility and performance by determining whether to be configured in common among the CCs or to be configured for each of the CCs.

In addition, according to an embodiment of the present invention, a communication method performed by a terminal is provided. The terminal includes: a reception unit configured to receive, from a base station, information indicating whether a field included in control information for performing multi-carrier scheduling is configured for each of carriers to be scheduled or is configured in common for the carriers to be scheduled; and a control unit configured to interpret the control information based on the information. The reception unit receives the control information from the base station, the control unit determines whether the field included in the control information is configured for each of the carriers to be scheduled or is configured in common for the carriers to be scheduled, and the reception unit receives each of the carriers scheduled by the control information based on the determination.

According to the above-described configuration, with respect to each of the fields of DCI for performing the multi-carrier scheduling, the base station 10 and the terminal 20 can adjust the trade-off between flexibility and performance by determining whether to be configured in common among the CCs or to be configured for each of the CCs. In other words, the multi-carrier scheduling can be performed by single control information in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive, from a base station, information indicating whether a field included in control information for performing multi-carrier scheduling is configured for each of carriers to be scheduled or is configured in common for the carriers to be scheduled; and
a control unit configured to interpret the control information based on the information, wherein
the reception unit receives the control information from the base station,
the control unit determines whether the field included in the control information is configured for each of the carriers to be scheduled or is configured in common for the carriers to be scheduled, and
the reception unit receives each of the carriers scheduled by the control information based on the determination.

2. The terminal as claimed in claim 1, wherein
the information is indicated for each field of the control information or is collectively indicated for a plurality of fields of the control information.

3. The terminal as claimed in claim 1, wherein
the control unit performs a configuration according to the information for each field or for a plurality of fields.

4. The terminal as claimed in claim 1, wherein
the control unit performs a configuration according to the information separately for an intra-band or an inter-band.

5. The terminal as claimed in claim 1, wherein
the control unit performs a configuration according to the information for each of configurable maximum carrier numbers.

6. A communication method performed by a terminal, the communication method comprising:
receiving, from a base station, information indicating whether a field included in control information for performing multi-carrier scheduling is configured for each of carriers to be scheduled or is configured in common for the carriers to be scheduled;
interpreting the control information based on the information;
receiving the control information from the base station;
determining whether the field included in the control information is configured for each of the carriers to be scheduled or is configured in common for the carriers to be scheduled; and
receiving each of the carriers scheduled by the control information based on the determination.
